(19) Europäisches Patentamt / European Patent Office / Office européen des brevets

(11) **EP 2 955 542 B1**

(12) **FASCICULE DE BREVET EUROPEEN**

(45) Date de publication et mention de la délivrance du brevet:
**26.04.2017 Bulletin 2017/17**

(51) Int Cl.:
*G01S 17/58* *(2006.01)*   *G01S 7/491* *(2006.01)*

(21) Numéro de dépôt: **15171034.0**

(22) Date de dépôt: **08.06.2015**

(54) **LIDAR DOPPLER A MESURE RELATIVE DE VITESSE**

LIDAR-DOPPLER ZUR RELATIVEN GESCHWINDIGKEITSMESSUNG

DOPPLER LIDAR WITH RELATIVE SPEED MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1401344**

(43) Date de publication de la demande:
**16.12.2015 Bulletin 2015/51**

(73) Titulaire: **THALES**
**92400 Courbevoie (FR)**

(72) Inventeurs:
• **RONDEAU, Philippe**
**26400 ALLEX (FR)**
• **SCHLOTTERBECK, Jean-Pierre**
**26300 ROCHEFORT-SAMSON (FR)**
• **LACONDEMINE, Xavier**
**26300 ALIXAN (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**FR-A1- 2 870 004    FR-A1- 2 965 064
US-A1- 2005 083 513    US-B2- 6 608 669
US-B2- 6 621 561**

EP 2 955 542 B1

**Description**

Le domaine de l'invention est celui de l'anémométrie Doppler nécessitant de connaître soit le sens de la vitesse du vent, soit celui de la vitesse du porteur de l'anémomètre lorsque celui-ci est monté sur un véhicule. Plus précisément, le domaine d'applications est l'aéronautique et plus spécifiquement encore, celui des hélicoptères.

Les systèmes anémométriques actuels des hélicoptères sont, tout comme ceux des avions, basés sur les mesures de pression totale par des sondes de Pitot et de pression statique. Ces systèmes sont toutefois peu adaptés au besoin des hélicoptères car ils ne permettent pas de couvrir l'ensemble de leur domaine de vol. D'une part, la mesure de vitesse air est indisponible à basse vitesse, jusqu'à environ 35 noeuds en raison des perturbations générées par le flux du rotor. D'autre part, les systèmes anémobarométriques des hélicoptères ne fournissent pas les trois composantes du vecteur vitesse mais essentiellement sa composante selon l'axe longitudinal du porteur.

Le « lidar » Doppler, LiDAR étant l'acronyme de « Light Detection And Ranging », résout en partie ces différents inconvénients. Il permet en effet d'effectuer une mesure de vitesse à distance, en dehors du flux du rotor de l'hélicoptère, sans avoir recours à une perche de nez. L'utilisation de plusieurs faisceaux laser ou d'un système de balayage de faisceau permet d'accéder aux trois composantes du vecteur vitesse air dans l'ensemble du domaine de vol du porteur. Le brevet FR 2 870 004 décrit un dispositif de mesure de ce type.

Le signal issu du lidar Doppler homodyne simple, qui correspond au battement entre une onde rétrodiffusée par les particules atmosphériques et une copie de l'onde émise, ne donne accès qu'à la valeur absolue de la projection du vecteur vitesse selon l'axe de mesure et l'information du signe de la vitesse est alors perdue. En effet le signal hétérodyne étant réel, son spectre, obtenu comme le carré du module de sa transformée de Fourier, est pair en fréquence et rien ne permet de déterminer si le décalage Doppler mesuré est positif ou négatif.

Sur avion, cela ne pose pas de problème particulier dans la mesure où l'on peut trouver des configurations des axes de visée pour lesquelles le signe de la vitesse est toujours le même sur l'ensemble du domaine de vol. En revanche, compte tenu des capacités d'évolution de l'hélicoptère dans toutes les directions mais aussi de la nécessité d'effectuer une mesure du module et de l'orientation du vent au sol, il est impératif de disposer d'une mesure de vitesse signée.

Il existe différentes solutions pour déterminer le signe de la vitesse. Une solution est proposée dans le brevet US 6 621 561 pour déterminer le sens de rotation d'un objet tournant. L'emploi d'un modulateur acousto-optique ou « MAO » permet de décaler la fréquence de l'onde optique émise ou de façon équivalente de l'oscillateur local, de sorte qu'à vitesse nulle, le battement entre l'onde rétrodiffusée et l'oscillateur local ne soit plus à fréquence nulle mais décalée d'une fréquence $f_{MAO}$. Par exemple, pour un lidar fonctionnant dans le proche infrarouge à la longueur d'onde de 1,55 $\mu$m, il est courant de choisir un MAO procurant un décalage de 40 MHz. Le domaine de fréquence couvert par les fréquences comprise entre 0 Hz et 40 MHz correspond alors aux vitesses négatives d'environ -30 m/s à 0 m/s et les fréquences au-delà de la fréquence $f_{MAO}$ correspondent aux vitesses positives.

L'utilisation d'un modulateur acousto-optique présente néanmoins plusieurs inconvénients :

- Fiabilité : le modulateur acousto-optique est un composant fragile, notamment en environnement thermique et vibratoire sévère et n'est donc pas adapté à l'environnement aéronautique ;
- Coût : le coût du modulateur acousto-optique est élevé par rapport au coût de l'ensemble de l'architecture optique ;
- Augmentation du domaine de fréquence. Pour un domaine de vitesse symétrique, le domaine de fréquence Doppler à analyser est doublé, la puissance de calcul nécessaire au niveau des traitements est augmentée d'autant.

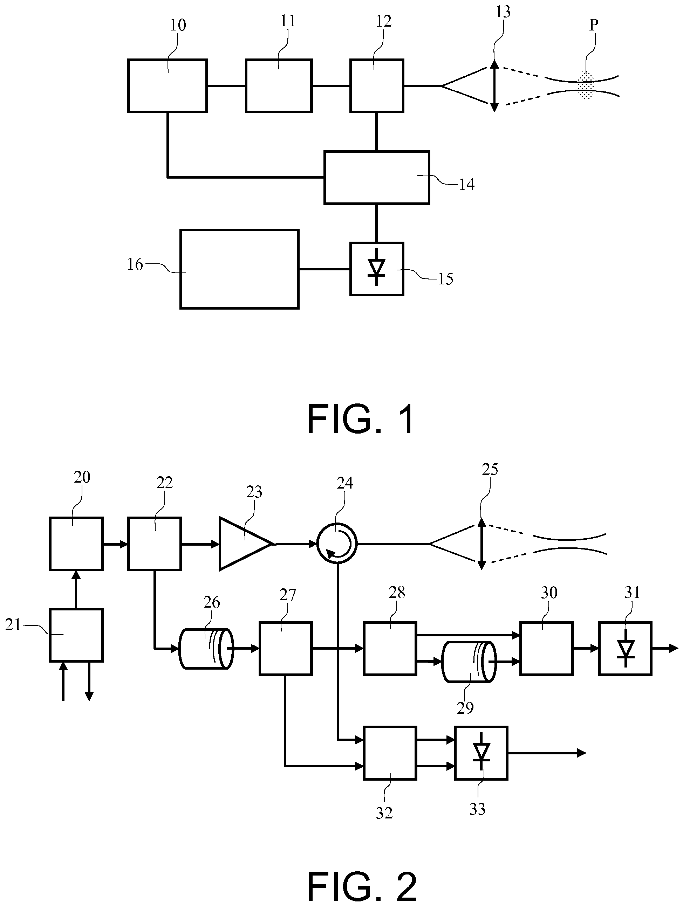

La figure 1 représente une architecture optique de type « CW », acronyme de « Continuous Wave » avec modulateur acousto-optique.

Une source laser 10 émet une onde optique de fréquence $\nu_L$ ou de longueur d'onde $\lambda_L$. Celle-ci est décalée en fréquence au moyen du modulateur 11, passe à travers le séparateur optique 12 puis est focalisée dans l'atmosphère grâce à un télescope d'émission réception 13. L'onde rétrodiffusée par les particules P naturellement présentes dans l'air est décalée en fréquence par effet Doppler d'une grandeur $f_D$ porteuse de l'information de vitesse V selon l'axe du faisceau laser. On a la relation classique : $f_D = 2 \cdot V / \lambda_L$
soit encore : $V = f_D \cdot \lambda / 2$

Le battement entre cette onde rétrodiffusée et l'oscillateur local réalisé par l'interféromètre 14 est détecté par le photodétecteur 15 et produit un signal électrique de fréquence $f_{MAO} + f_D$. Une analyse spectrale par des moyens de traitement 16 qui peut être, par exemple, un périodogramme moyenné, permet de faire émerger le signal du bruit et d'extraire l'information de fréquence.

Un dispositif différent permet d'accéder au signe de la vitesse sans avoir recours à un modulateur acousto-optique. Il est représenté en figure 2. Le principe de fonctionnement consiste à moduler la fréquence d'une source laser 20 au moyen d'un générateur à rampes de fréquences 21. Ce dispositif permet de mesurer conjointement la vitesse V = $f_D \cdot \lambda / 2$ et la distance D séparant la cible de l'anémomètre.

On note $\alpha$ et $-\alpha$ les pentes des rampes de fréquence du générateur à rampes. Le dispositif comprend une voie d'émission-réception comprenant un séparateur 22, un amplificateur 23, un circulateur 24 et un télescope d'émission réception 25. Le dispositif comporte également une voie référence comprenant une première ligne à retard 26, un second séparateur 27, un troisième séparateur 28, une seconde ligne à retard 29, un premier interféromètre 30 et un premier détecteur 31. Enfin, le dispositif comporte une voie de mesure comprenant un second interféromètre 32 et un second détecteur 33. En traitant séparément les signaux issus de rampes de fréquence de pente $+\alpha$ et $-\alpha$, on mesure respectivement au moyen de la voie de mesure les fréquences $f_+ = \left| f_D - \dfrac{2\alpha D}{c} \right|$ et $f_- = \left| f_D + \dfrac{2\alpha D}{c} \right|$ .

A titre d'exemple, si la pente $\alpha$ vaut 6 MHz/$\mu$s, si la distance D vaut 25 m, alors $\dfrac{2.\alpha.D}{c} = 1\,\mathrm{MHz}$. Si la vitesse est positive, alors le décalage Doppler vaut +5 MHz, la fréquence $f_+$ vaut 4 MHz et la fréquence $f_-$ vaut 6 MHz. A l'inverse, si la vitesse est négative, alors le décalage Doppler vaut -5 MHz, la fréquence $f_+$ vaut 6 MHz et la fréquence $f_-$ vaut 4 MHz. Ainsi, on peut retrouver, en comparant la différence entre les fréquences $f_+$ et $f_-$ non seulement la valeur de la vitesse mais son signe. L'écart entre les deux fréquences est représentatif de la distance à l'objet.

Ce type de dispositif présente cependant plusieurs inconvénients. Entre autres, il nécessite l'emploi de sources laser spécifiques, avec une forme d'onde bien maitrisée et contrôlée au moyen d'une voie de détection supplémentaire, augmentant ainsi le nombre de composants nécessaires.

Le lidar selon l'invention ne présente pas ces inconvénients. Plus précisément, l'invention a pour objet un lidar Doppler destiné à mesurer la vitesse d'une cible, ledit lidar comprenant au moins une source laser émettant un signal optique, des moyens optiques d'émission dudit signal optique et de réception d'un signal optique rétrodiffusé par ladite cible éclairée par ledit signal optique, des moyens de détection hétérodyne permettant de faire battre le signal optique d'émission et le signal optique rétrodiffusé et de mesurer la fréquence de battement du signal hétérodyne de battement, ladite fréquence de battement comportant un pic à la fréquence dite Doppler représentative de la vitesse absolue de la cible par rapport au lidar,
caractérisé en ce que le lidar comporte :

Des premiers moyens de modulation de la fréquence optique du signal optique de façon que ladite fréquence soit la somme d'une fréquence constante et d'une fréquence variable d'amplitude déterminée modulée par une fonction temporelle périodique ;
Des seconds moyens permettant de calculer le spectre du signal hétérodyne mesuré et de créer deux spectres de mesure, le premier spectre et le second spectre étant obtenus en décalant le spectre du signal hétérodyne mesuré d'une valeur positive et négative en fréquence, ladite valeur de recalage étant égale à la différence de fréquence entre la fréquence instantanée du signal d'émission et la fréquence d'un signal d'émission émis à un temps décalé du temps de trajet aller-retour entre le lidar et la cible ;
Des troisièmes moyens de comparaison des deux spectres de mesure, la différence d'amplitude entre les deux spectres à la fréquence Doppler permettant de déterminer le sens de la vitesse de la cible.

Avantageusement, les seconds moyens comportent :

- Un premier étage de mesure du signal hétérodyne de réception comportant les moyens suivants :

  - Un convertisseur analogique-numérique
  - Une fenêtre d'observation de durée déterminée limitant la durée du signal hétérodyne numérique ;
  - Des moyens permettant d'effectuer la transformée de Fourier du signal hétérodyne numérique et de calculer le carré de son module pour obtenir son spectre ;

- Un second étage de traitement du spectre numérique issu du premier étage comprenant les moyens suivants :

  - Deux chaines d'analyse disposées en parallèle, chaque chaine assurant les fonctions de recalage du spectre par une valeur positive ou négative en fréquence, d'accumulation d'une quantité déterminée de signaux numériques et d'estimation de la fréquence Doppler et de l'amplitude du pic correspondant à ladite fréquence Doppler ;
  - De calcul de la valeur de la vitesse de la cible et de sens par rapport au lidar.

Avantageusement, les seconds moyens comportent :

- Un convertisseur analogique-numérique ;
- Une fenêtre d'observation de durée déterminée limitant la durée du signal hétérodyne numérique ;
- Des moyens permettant de multiplier le signal hétérodyne numérique par une fonction exponentielle complexe dont l'exposant est proportionnel à la valeur de recalage pour obtenir un signal numérique complexe ;
- Des moyens permettant d'effectuer la transformée de Fourier du signal numérique complexe et de calculer le carré de son module pour obtenir son spectre ;
- Une chaine d'analyse assurant les fonctions :

  - D'accumulation d'une quantité déterminée de spectres numériques signés et d'estimation de la fréquence Doppler,
  - D'analyse de l'amplitude et de la largeur du pic correspondant à ladite fréquence Doppler ;
  - De calcul de la valeur de la vitesse de la cible et de sens par rapport au lidar en fonction de ladite fréquence Doppler et de l'amplitude et de la largeur du pic correspondant.

Avantageusement, la durée de la fenêtre d'observation dépend du temps de cohérence atmosphérique.

Avantageusement, la fréquence d'émission est située dans le proche infrarouge.

Avantageusement, l'amplitude de la fréquence variable du signal optique d'émission est comprise entre 10 MHz et 100 MHz et sa fréquence de modulation est comprise entre 2 kHz et 20 kHz.

Avantageusement, la distance séparant le lidar de la cible est comprise entre 10 m et 100 m.

L'invention sera mieux comprise et d'autres avantages apparaîtront à la lecture de la description qui va suivre donnée à titre non limitatif et grâce aux figures annexées parmi lesquelles :

La figure 1 déjà commentée représente une première architecture optique de type « CW » d'un lidar Doppler selon l'art antérieur ;

La figure 2 déjà commentée représente une seconde architecture optique sans modulateur optique d'un lidar Doppler selon l'art antérieur ;

Les figures 3 et 4 représentent le synoptique d'un lidar selon l'invention ;

Les figures 5, 6 et 7 représentent les signaux de mesure dans trois cas de figure différent, le premier sans recalage en fréquence, le second en décalant la fréquence d'une valeur positive et le troisième en décalant la fréquence d'une valeur négative.

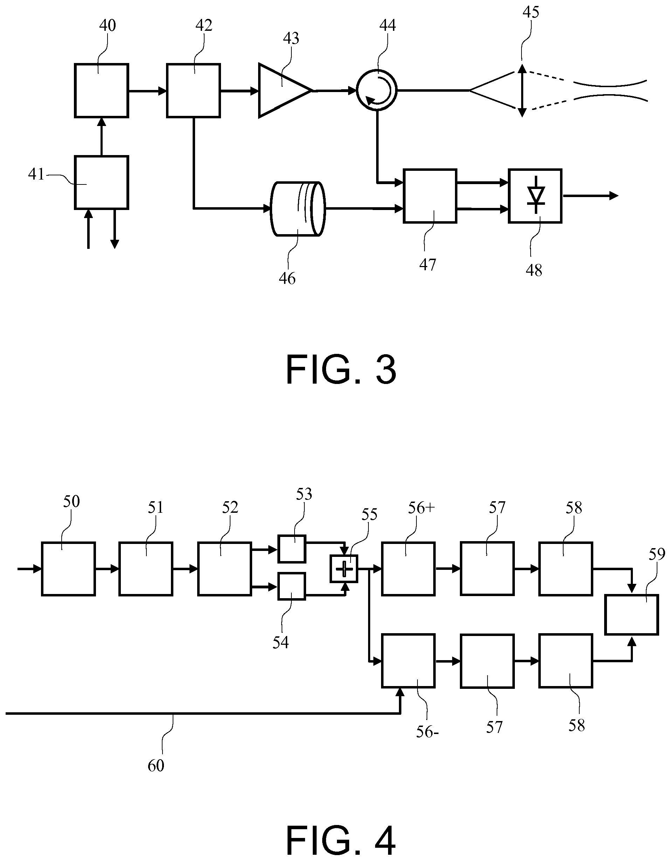

Les figures 3 et 4 représentent le synoptique d'un lidar selon l'invention. La figure 3 représente les ensembles d'émission et de réception du lidar. La figure 4 représente un exemple de traitement du signal électrique issu de l'ensemble de réception.

L'ensemble d'émission comporte une source laser 40 modulée par un ensemble de modulation de fréquence 41 dont la fonction est détaillée ci-dessous. Le faisceau d'émission passe à travers un séparateur optique 42. Une première partie est amplifiée par l'amplificateur 43, passe à travers le circulateur 44 puis est focalisée dans l'atmosphère grâce à un télescope d'émission réception 45 à la distance D du lidar. Une seconde partie passe à travers une ligne à retard 46 de longueur optique égale au double de la distance et est dirigée vers le premier port d'un interféromètre 47.

L'onde rétrodiffusée passe à travers le télescope 45, le circulateur 44 et est dirigée vers le second port de l'interféromètre 47. Le battement des deux ondes optique injectées dans l'interféromètre produit le signal électrique en sortie du photodétecteur 48.

Le principe de fonctionnement d'un lidar selon l'invention est le suivant. À un instant t donné, le laser d'émission 40 émet une onde lumineuse dont la fréquence optique $\nu_{laser}(t)$ est modulée par le modulateur 41. L'expression de cette modulation est la suivante :

$$\nu_{laser}(t) = \nu_0 + A \cdot \sin(2\pi f t)$$

Avec $\nu_0$ fréquence porteuse de l'onde optique
A amplitude de la modulation de fréquence
F fréquence de modulation

A titre d'exemple non limitatif, la source laser d'émission peut émettre dans le proche infrarouge. La fréquence $\nu_0$ vaut alors $1,94 \times 10^{14}$ Hz et correspond à une longueur d'onde $\lambda$ de 1,55 $\mu$m. L'amplitude A est comprise entre 10 MHz et 100 MHz et plus précisément peut valoir 50 MHz. La fréquence f est comprise entre 2 kHz et 20 kHz et plus précisément peut valoir 10 kHz.

Quand cette onde émise atteint la cible située à la distance D, la fréquence $\nu_{retrodif}(t)$ de l'onde rétrodiffusée vaut, par effet Doppler,:

$$\nu_{retrodif}\left(t\right) = \nu_{laser}\left(t - \frac{2D}{c}\right) + f_{Doppler}$$

c étant la célérité de la lumière. D vaut généralement quelques dizaines de mètres. Dans les exemples numériques suivants, on choisit D égal à 25 m. La fréquence $f_{Doppler}$ correspond au décalage Doppler en fréquence qui vaut :

$$f_{Doppler} = \frac{2}{\lambda} \cdot V$$

V étant la vitesse de la cible selon l'axe du faisceau laser d'émission. Avec la longueur d'onde précédente de 1,55 $\mu$m, la fréquence de décalage Doppler vaut 1,3 MHz pour une vitesse de 1 m/s.

Le lidar selon l'invention comprend un interféromètre 47 capable d'assurer une détection hétérodyne, c'est-à-dire de produire un signal électrique proportionnel au battement entre l'onde optique d'émission et l'onde optique rétrodiffusée. La fréquence de ce signal de battement $f_{battement}$ vaut donc, à l'instant t :

$$f_{battement}\left(t\right) = \left| \nu_{retrodif}\left(t\right) - \nu_{laser}\left(t\right) \right|$$

Soit encore $f_{battement}\left(t\right) = \left| A \cdot \left[ \sin\left( 2\pi f \cdot \left( t - \frac{2D}{c}\right)\right) - \sin(2\pi ft) \right] + f_{Doppler} \right|$

Et en remplaçant la différence des deux fonctions en sinus par leur expression trigonométrique associée :

$$f_{battement}\left(t\right) = \left| 2A \cdot \sin\left( \frac{-2\pi f D}{c}\right) \cdot \cos\left( 2\pi f \cdot \left( t - \frac{D}{c}\right)\right) + f_{Doppler} \right|$$

Ainsi, la fréquence instantanée du signal de battement est donc la somme de la fréquence Doppler et d'un terme de modulation. Ce terme est modulé sinusoïdalement avec la même fréquence de modulation que l'onde d'émission et possède une amplitude modifiée d'un facteur $2\sin\left(\frac{2\pi f D}{c}\right)$. Ce facteur est faible et, en prenant les valeurs numériques précédentes, c'est-à-dire la fréquence f égale à 10 kHz, D égal à 25 m et A égal à 50 MHz, on obtient :

$$\sin\left(\frac{2\pi f D}{c}\right) \approx 5{,}2 \times 10^{-3}$$

L'amplitude totale des variations de la fréquence du signal de battement vaut donc 2,08 MHz avec les valeurs numériques précédentes. La détermination de la fréquence de battement se fait classiquement par analyse spectrale ou de Fourier.

En l'absence de ce terme de modulation, la fréquence de battement est rigoureusement égale à la valeur absolue de la fréquence Doppler et il est impossible de remonter au signe de la vitesse de la cible par rapport au lidar. En ajoutant la modulation de la fréquence optique de la source laser, il devient possible de déterminer le signe de cette vitesse. Le principe consiste à faire deux calculs. Dans le premier calcul, on effectue un recalage du spectre instantané du signal reçu en ajoutant à la fréquence mesurée le terme de modulation. Dans le second calcul, on ajoute l'opposé de ce même terme de recalage. On note ces les termes de recalage $f_{recalage+}$ et $f_{recalage-}$. Leurs expressions sont les suivantes :

$$f_{recalage+}(t) = 2A\left|\sin\left(\frac{2\pi fD}{c}\right)\cdot\cos\left(2\pi f\cdot\left(t-\frac{D}{c}\right)\right)\right|$$

$$f_{recalage-}(t) = -2A\left|\sin\left(\frac{2\pi fD}{c}\right)\cdot\cos\left(2\pi f\cdot\left(t-\frac{D}{c}\right)\right)\right|$$

Les deux spectres obtenus sont donc identiques mais décalés l'un par rapport à l'autre en fréquence.

Cependant, le signal fréquentiel résultant du battement est généralement noyé dans le bruit pour un spectre individuel. Il est alors nécessaire de faire une intégration non cohérente sur plusieurs dizaines de millisecondes pour le faire émerger du bruit. Cette durée d'intégration étant longue par rapport à la modulation du signal, il en résulte un étalement spectral de la raie du signal sur environ 2 MHz. Cet étalement spectral est à comparer au décalage Doppler qui vaut 1,3 MHz pour une vitesse de 1 m/s avec les mêmes données numériques.

La figure 4 représente une implémentation possible de l'ensemble du traitement du signal hétérodyne selon l'invention. Ce traitement comporte deux étages. Un premier étage de mesure du signal hétérodyne de réception comportant les moyens suivants :

- Un convertisseur analogique-numérique 50 du signal électronique issu du photodétecteur 48 ;
- Une fenêtre d'observation 51 de durée déterminée limitant la durée du signal hétérodyne numérique ;
- D'un moyen 52 permettant d'effectuer la transformée de Fourier complexe du signal hétérodyne
- Des moyens 53, 54 et 55 permettant d'effectuer le calcul des carrés des parties réelles et imaginaires de la transformée de Fourier du signal hétérodyne numérique, puis de les sommer.

La taille de la transformée de Fourier doit être choisie suffisamment longue pour obtenir un pas de discrétisation fréquentielle d'environ un dixième de l'amplitude de la modulation de fréquence attendue. A titre d'exemple, la fenêtre de pondération gaussienne de largeur à $1/e^2$ est égale à 1 $\mu$s et la transformée de Fourier comporte 4096 points avec une fréquence d'échantillonnage d'environ 400 MHz. Le pas de discrétisation fréquentielle est donc de l'ordre de 100 kHz.

Un second étage de traitement des spectres issus du premier étage comprenant les moyens suivants :

- Deux chaines d'analyse disposées en parallèle, chaque chaine assurant les fonctions d'addition $56_+$ ou de soustraction 56- d'un terme de recalage en fréquence du spectre, d'accumulation 57 d'une quantité déterminée de spectres numériques, de détection et d'estimation 58 de la fréquence Doppler et de l'amplitude du pic correspondant à ladite fréquence Doppler ;
- De calcul 59 de la valeur de la vitesse de la cible et de son sens par rapport au lidar.

Un signal de synchronisation 60 permet de synchroniser les chaines de traitement avec l'ensemble de modulation de fréquence 41.

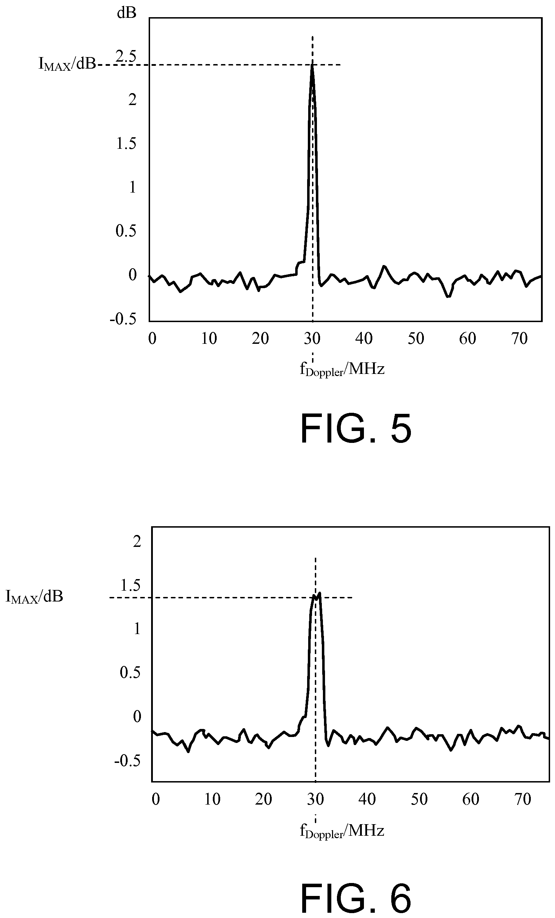

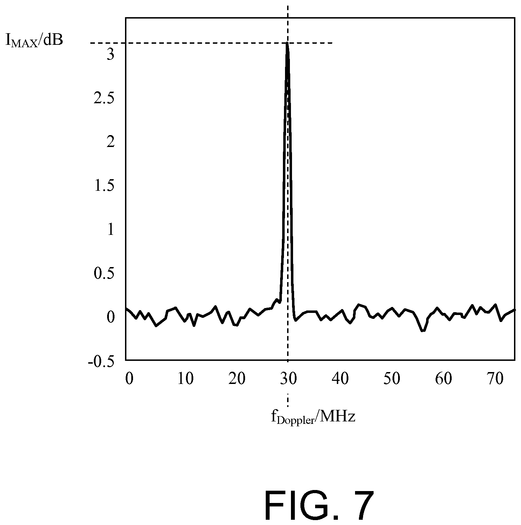

Les figures 5, 6 et 7 représentent les spectres des signaux de mesure dans trois cas de figure différents, le premier représenté sur la figure 5 sans recalage en fréquence, le second représenté sur la figure 6 en décalant la fréquence d'une valeur positive et le troisième représenté sur la figure 7 en décalant la fréquence d'une valeur négative. La valeur de recalage positive correspond à l'hypothèse d'une vitesse positive et la valeur de recalage négative correspond à l'hypothèse d'une vitesse négative. L'abscisse correspond aux fréquences exprimées en mégahertz et l'ordonnée correspond aux amplitudes des spectres exprimées en décibels.

Dans ces trois exemples, La vitesse de la cible vaut environ 23 m/s, ce qui correspond à une fréquence Doppler de 30 MHz, la distance D à la cible vaut 25 m, la fréquence A vaut 50 MHz et la fréquence de modulation f vaut 10 kHz.

Dans les trois cas, les spectres obtenus présentent une raie significative à la même fréquence Doppler de 30 MHz. Cependant, l'amplitude $I_{MAX}$ des raies est différente. Elle est maximale lorsque la fréquence de recalage a le même signe que la fréquence Doppler. C'est le cas de la figure 7. La vitesse de la cible est donc négative, dans cet exemple.

On obtient ainsi un traitement simple permettant de déterminer le sens et la valeur de la vitesse de la cible par rapport au lidar.

Le calcul du recalage peut également être effectué en une seule étape. En effet, le signal hétérodyne étant réel, sa transformée de Fourier présente une symétrie hermitienne et le carré du module de cette transformée de Fourier est pair. Les deux recalages peuvent donc être effectués en une seule étape en décalant le spectre en fréquences signées du signal reçu par le terme de recalage précédemment calculé. Ceci correspond en effet à ajouter le terme de recalage pour les fréquences positives et à le retrancher en valeur absolue pour les fréquences négatives.

Cette méthode de calcul présente de plus un second avantage. Le fait de décaler le spectre correspond mathématiquement à le convoluer par une distribution de Dirac à la fréquence désirée. Une telle convolution dans le domaine fréquentiel correspond à une multiplication par une fonction exponentielle complexe dans le domaine temporel. Il est donc possible de réaliser le recalage du spectre en fréquences signées pour une valeur quelconque du recalage en multipliant le signal hétérodyne mesuré par une fonction exponentielle complexe numérique à ladite fréquence de recalage avant de réaliser la transformation de Fourier. L'ensemble des traitements est alors ensuite réalisé sur les spectres signés. Dans les spectres cumulés, la raie correspondant au signe incorrect de la vitesse présente un étalement spectral notable qui permet de choisir sans ambigüité la raie correspondant au signe de vitesse correct.

## Revendications

1. Lidar Doppler destiné à mesurer la vitesse d'une cible, ledit lidar comprenant au moins une source laser (40) émettant un signal optique, des moyens optiques d'émission (42, 43, 44, 45) dudit signal optique et de réception (44, 45, 46) d'un signal optique rétrodiffusé par ladite cible éclairée par ledit signal optique, des moyens de détection hétérodyne (47, 48) permettant de faire battre le signal optique d'émission et le signal optique rétrodiffusé et de mesurer la fréquence de battement du signal hétérodyne de battement, ladite fréquence de battement comportant un pic à la fréquence dite Doppler représentative de la vitesse absolue de la cible par rapport au lidar,

   **caractérisé en ce que** le lidar comporte :

   Des premiers moyens (41) de modulation de la fréquence optique du signal optique de façon que ladite fréquence soit la somme d'une fréquence constante et d'une fréquence variable d'amplitude déterminée modulée par une fonction temporelle périodique ;
   Des seconds moyens (50, 51, 52, 53, 54, 55, 56, 57, 58) permettant de calculer le spectre du signal hétérodyne mesuré et de créer deux spectres de mesure, le premier spectre et le second spectre étant obtenus en décalant le spectre du signal hétérodyne mesuré d'une valeur de recalage positive et négative en fréquence, ladite valeur de recalage étant égale à la différence de fréquence entre la fréquence instantanée du signal d'émission et la fréquence d'un signal d'émission émis à un temps décalé du temps de trajet aller-retour entre le lidar et la cible ;
   Des troisièmes moyens (59) de comparaison des deux spectres de mesure, la différence de forme entre les deux spectres à la fréquence Doppler permettant de déterminer le sens de la vitesse de la cible.

2. Lidar Doppler selon la revendication 1, **caractérisé en ce que** les seconds moyens comportent :

   - Un premier étage de mesure du signal hétérodyne de réception comportant les moyens suivants :

     - Un convertisseur analogique-numérique (50) ;
     - Une fenêtre d'observation (51) de durée déterminée limitant la durée du signal hétérodyne numérique ;
     - Des moyens (52, 53, 54, 55) permettant d'effectuer la transformée de Fourier du signal hétérodyne numérique et de calculer le carré de son module pour obtenir son spectre ;

   - Un second étage de traitement du spectre numérique issu du premier étage comprenant les moyens suivants :

     - Deux chaines d'analyse (56) disposées en parallèle, chaque chaine assurant les fonctions de recalage du spectre par une valeur positive ou négative en fréquence, d'accumulation d'une quantité déterminée de signaux numériques et d'estimation de la fréquence Doppler et de l'amplitude du pic correspondant à ladite fréquence Doppler ;
     - De calcul (59) de la valeur de la vitesse de la cible et de sens par rapport au lidar.

3. Lidar Doppler selon la revendication 1, **caractérisé en ce que** les seconds moyens comportent :

   - Un convertisseur analogique-numérique ;
   - Une fenêtre d'observation de durée déterminée limitant la durée du signal hétérodyne numérique ;
   - Des moyens permettant de multiplier le signal hétérodyne numérique par une fonction exponentielle complexe dont l'exposant est proportionnel à la valeur de recalage pour obtenir un signal numérique complexe ;
   - Des moyens permettant d'effectuer la transformée de Fourier du signal numérique complexe et de calculer le carré de son module pour obtenir son spectre ;
   - Une chaine d'analyse assurant les fonctions :

- D'accumulation d'une quantité déterminée de spectres numériques signés et d'estimation de la fréquence Doppler,
- D'analyse de l'amplitude et de la largeur du pic correspondant à ladite fréquence Doppler ;
- De calcul de la valeur de la vitesse de la cible et de sens par rapport au lidar en fonction de ladite fréquence Doppler et de l'amplitude et de la largeur du pic correspondant.

4. Lidar Doppler selon l'une des revendications précédentes, **caractérisé en ce que** la durée de la fenêtre d'observation dépend du temps de cohérence atmosphérique.

5. Lidar Doppler selon l'une des revendications précédentes, **caractérisé en ce que** la fréquence d'émission est située dans le proche infrarouge.

6. Lidar Doppler selon l'une des revendications précédentes, **caractérisé en ce que** l'amplitude de la fréquence variable du signal optique d'émission est comprise entre 10 MHz et 100 MHz et sa fréquence de modulation est comprise entre 2 kHz et 20 kHz.

7. Lidar Doppler selon l'une des revendications précédentes, **caractérisé en ce que** la distance séparant le lidar de la cible est comprise entre 10 m et 100 m.


**Patentansprüche**

1. Doppler-Lidar zum Messen der Geschwindigkeit eines Ziels, wobei das Lidar Folgendes umfasst: wenigstens eine Laserquelle (40), die ein optisches Signal aussendet, optische Mittel (42, 43, 44, 45) zum Aussenden des optischen Signals und zum Empfangen (44, 45, 46) eines optischen Signals, das von dem durch das optische Signal beleuchteten Ziel zurückgestreut wird, Heterodyn-Erkennungsmittel (47, 48) zum Überlagern des optischen Sendesignals und des zurückgestreuten optischen Signals und zum Messen der Schwebungsfrequenz des Heterodyn-Überlagerungssignals, wobei die Schwebungsfrequenz einen Peak auf der Doppler-Frequenz genannten Frequenz hat, die die absolute Geschwindigkeit des Ziels mit Bezug auf das Lidar repräsentiert,
**dadurch gekennzeichnet, dass** das Lidar Folgendes umfasst:

   erste Mittel (41) zum Modulieren der optischen Frequenz des optischen Signals, so dass die Frequenz die Summe aus einer konstanten Frequenz und einer variablen Frequenz mit einer bestimmten Amplitude ist, moduliert durch eine periodische zeitliche Funktion;
   zweite Mittel (50, 51, 52, 53, 54, 55, 56, 57, 58) zum Berechnen des Spektrums des gemessenen Heterodyn-Signals und zum Erzeugen von zwei Messspektren, wobei das erste Spektrum und das zweite Spektrum durch Verschieben des Spektrums des gemessenen Heterodyn-Signals um einen frequenzmäßig positiven und negativen Versatzwert erhalten wird, wobei der Versatzwert gleich der Frequenzdifferenz zwischen der momentanen Frequenz des Sendesignals und der Frequenz eines Sendesignals ist, das zu einer von der Hin- und Rücklaufzeit zwischen dem Lidar und dem Ziel versetzten Zeit gesendet wird;
   dritte Mittel (59) zum Vergleichen der zwei Messspektren, wobei die Formdifferenz zwischen den beiden Spektren auf der Doppler-Frequenz das Bestimmen der Richtung der Geschwindigkeit des Ziels zulässt.

2. Doppler-Lidar nach Anspruch 1, **dadurch gekennzeichnet, dass** die zweiten Mittel Folgendes umfassen:

   - eine erste Stufe des Messens des Heterodyn-Empfangssignals, das die folgenden Mittel umfasst:

      - einen Analog-Digital-Wandler (50);
      - ein Beobachtungsfenster (51) einer bestimmten Dauer, das die Dauer des digitalen Heterodyn-Signals begrenzt;
      - Mittel (52, 53, 54, 55), die die Bewirkung der Fourier-Transformation des digitalen Heterodyn-Signals und die Berechnung des Quadrats seines Moduls zum Erhalten seines Spektrums zulässt;
      - eine zweite Stufe des Verarbeitens des digitalen Spektrums aus der ersten Stufe, das die folgenden Schritte beinhaltet:

         - zwei parallel angeordnete Analyseketten (56), wobei jede Kette die Funktionen des Versetzens des Spektrums um einen frequenzmäßig positiven oder negativen Wert, des Akkumulierens einer bestimmten Menge von digitalen Signalen und des Schätzens der Doppler-Frequenz und der Amplitude des Peaks entsprechend der Doppler-Frequenz gewährleistet;
- Berechnen (59) des Wertes der Geschwindigkeit des Ziels und der Richtung mit Bezug auf das Lidar.

3. Doppler-Lidar nach Anspruch 1, **dadurch gekennzeichnet, dass** die zweiten Mittel Folgendes umfassen:

- einen Analog-Digital-Wandler;
- ein Beobachtungsfenster von bestimmter Dauer, das die Dauer des digitalen Heterodyn-Signals begrenzt;
- Mittel, die eine Multiplikation des digitalen Heterodyn-Signals mit einer komplexen Exponentialfunktion zulassen, deren Exponente proportional zum Versatzwert ist, um ein komplexes digitales Signal zu erhalten;
- Mittel, die das Bewirken der Fourier-Transformation des komplexen digitalen Signals und das Berechnen des Quadrats seines Moduls zulassen, um sein Spektrum zu erhalten;
- eine Analysekette, die die folgenden Funktionen gewährleistet:

    - Akkumulieren einer bestimmten Menge von digitalen signierten Spektren und Schätzen der Doppler-Frequenz,
    - Analysieren der Amplitude und der Breite des Peaks entsprechend der Doppler-Frequenz;
    - Berechnen des Wertes der Geschwindigkeit des Ziels und der Richtung mit Bezug auf das Lidar in Abhängigkeit von der Doppler-Frequenz und der Amplitude und der Breite des entsprechenden Peaks.

4. Doppler-Lidar nach einem der vorherigen Ansprüche, **dadurch gekennzeichnet, dass** die Dauer des Beobachtungsfensters von der atmosphärischen Kohärenzzeit abhängig ist.

5. Doppler-Lidar nach einem der vorherigen Ansprüche, **dadurch gekennzeichnet, dass** sich die Sendefrequenz im nahen Infrarot befindet.

6. Doppler-Lidar nach einem der vorherigen Ansprüche, **dadurch gekennzeichnet, dass** die Amplitude der variablen Frequenz des optischen Sendesignals zwischen 10 MHz und 100 MHz liegt und seine Modulationsfrequenz zwischen 2 kHz und 20 kHz liegt.

7. Doppler-Lidar nach einem der vorherigen Ansprüche, **dadurch gekennzeichnet, dass** die Distanz zwischen dem Lidar und dem Ziel zwischen 10 m und 100 m liegt.

**Claims**

1. A Doppler lidar intended to measure the speed of a target, said lidar comprising at least one laser source (40) transmitting an optical signal, optical means for transmitting (42, 43, 44, 45) said optical signal and for receiving (44, 45, 46) an optical signal backscattered by said target illuminated by said optical signal, heterodyne detection means (47, 48) making it possible to make the transmission optical signal and the backscattered optical signal beat and measure the beat frequency of the beat heterodyne signal, said beat frequency comprising a peak at the so-called Doppler frequency representative of the absolute speed of the target relative to the lidar,
**characterised in that** the lidar comprises:

first means (41) for modulating the optical frequency of the optical signal so that said frequency is the sum of a constant frequency and of a variable frequency of determined amplitude modulated by a periodic temporal function;
second means (50, 51, 52, 53, 54, 55, 56, 57, 58) making it possible to compute the spectrum of the measured heterodyne signal and to create two measurement spectra, the first spectrum and the second spectrum being obtained by shifting the spectrum of the measured heterodyne signal by a positive and negative frequency realignment value, said realignment value being equal to the frequency difference between the instantaneous frequency of the transmission signal and the frequency of a transmission signal transmitted at a time shifted relative to the round-trip travel time between the lidar and the target;
third means (50) for comparing the two measurement spectra, the difference in form between the two spectra at the Doppler frequency making it possible to determine the direction of the speed of the target.

2. The Doppler lidar according to Claim 1, **characterised in that** the second means comprise:

- a first stage for measuring the reception heterodyne signal comprising the following means:

- an analogue-digital converter (50);
- an observation window (51) of determined duration limiting the duration of the digital heterodyne signal;
- means (52, 53, 54, 55) making it possible to perform the Fourier transform of the digital heterodyne signal and to compute the square of its modulus so as to obtain its spectrum;
- a second stage for processing the digital spectrum obtained from the first stage comprising the following means:

- two analysis chains (56) arranged in parallel, each chain providing the functions of realignment of the spectrum by a positive or negative frequency value, of accumulation of a determined quantity of digital signals and of estimation of the Doppler frequency and of the amplitude of the peak corresponding to said Doppler frequency;
- means for computing (59) the value of the speed of the target and direction relative to the lidar.

3. The Doppler lidar according to Claim 1, **characterised in that** the second means comprise:

- an analogue-digital converter;
- an observation window of determined duration limiting the duration of the digital heterodyne signal;
- means making it possible to multiply the digital heterodyne signal by a complex exponential function of which the exponent is proportional to the realignment value so as to obtain a complex digital signal;
- means making it possible to perform the Fourier transform of the complex digital signal and to compute the square of its modulus so as to obtain its spectrum;
- an analysis chain providing the functions:

- of accumulation of a determined quantity of signed digital spectra and of estimation of the Doppler frequency,
- of analysis of the amplitude and of the width of the peak corresponding to said Doppler frequency;
- of computation of the value of the speed of the target and direction relative to the lidar as a function of said Doppler frequency and of the amplitude and the width of the corresponding peak.

4. The Doppler lidar according to any of the preceding claims, **characterised in that** the duration of the observation window depends on the atmospheric coherence time.

5. The Doppler lidar according to any of the preceding claims, **characterised in that** the transmission frequency is situated in the near infrared.

6. The Doppler lidar according to any of the preceding claims, **characterised in that** the amplitude of the variable frequency of the transmission optical signal is between 10 MHz and 100 MHz and its modulation frequency is between 2 kHz and 20 kHz.

7. The Doppler lidar according to any of the preceding claims, **characterised in that** the distance separating the lidar from the target is between 10 m and 100 m.

FIG. 1

FIG. 2

FIG. 3

FIG. 4

FIG. 5

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870004

- US 6621561 B